# EUROPEAN PATENT APPLICATION

(11) **EP 1 455 103 A1**
(43) Date of publication of application: **08.09.2004**
(21) Application number: 02788840.3
(22) Date of filing: 13.12.2002
(51) Int. Cl.: F16C 41/00, F16C 19/18, F16C 35/077, G01P 3/487, B60B 35/18

(54) **ROLLING BEARING FOR VEHICLE**

(30) Priority: 13.12.2001 JP 2001379651
(71) Applicant: Koyo Seiko Co., Ltd., Osaka-shi, Osaka 542-0081 (JP)
(72) Inventor: NAKASHITA, Tomonori, Koyo Seiko Co., Ltd., Osaka-shi, Osaka 542-0081 (JP); DEGUCHI, Masaru, Koyo Seiko Co., Ltd., Osaka-shi, Osaka 542-0081 (JP); UCHIDA, Satoshi, Toyota-shi, Aichi-ken 471-8571 (JP); IWATSUKI, Kenichi, Toyota-shi, Aichi-ken 471-8571 (JP)
(74) Representative: TER MEER STEINMEISTER & PARTNER GbR
(86) International application number: PCT/JP2002/013090
(87) International publication number: WO 2003/054402

(57) **Abstract**

A rolling bearing apparatus comprises an outer ring inserted into a knuckle, a stop ring fitted to an inner peripheral surface of the knuckle to axially locate the outer ring and having circumferentially a cutout and a rotation detecting device for detecting a rotation of the inner ring. The rotation detecting device comprises a pulsar ring and a detector which comprises a detecting main body and a detecting element. The detecting main body is fixed to the knuckle, while an endportion thereof extends from substantially axially the same position as the stop ring to a position where the end portion axially faces the pulsar ring via the cutout of the stop ring. The detecting element is disposed in the end portion of the detecting main body to axially face the pulsar ring and detects a variation of a magnetic field according to a rotation of the pulsar ring.

## Description

### TECHNICAL FIELD

The present invention relates to a vehicle-use rolling bearing apparatus.

### RELATED BACKGROUND ART

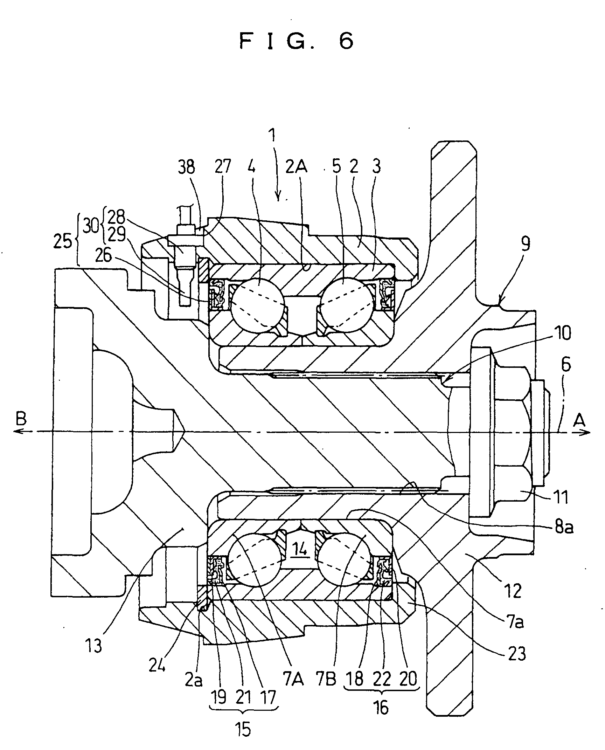

Referring to Fig. 6, a conventional vehicle-use rolling bearing apparatus 1 is incorporated into a knuckle 2 mounted non-rotatably on a vehicle body side. The rolling bearing apparatus 1 comprises an outer ring 3, two rows of balls 4 and 5 in an axial direction 6, a pair of inner rings 7A and 7B, a hub wheel 9 for mounting a wheel, and a support shaft 10. The outer ring 3 is pressed into a support hole 2A formed in the knuckle 2. The inner rings 7A and 7B are rotatably carried around an axis 6 via the balls 4 and 5 with respect to the outer ring 3. The hub wheel 9 is pressed into a central hole 7a of the inner rings 7A and 7B from one side in an axial direction (vehicle outer side) A. The support shaft 10 is spline-fitted into a central hole 8a of the hub wheel 9 from the other side in the axial direction (vehicle inner side) B.

A nut 11 mounted on an end portion of the support shaft 10 is fastened into an end portion of the hub wheel 9 so that respective end faces of the inner rings 7A and 7B are compression-fitted to each other by a diametrically-enlarged portion 12 of the hub wheel 9 and a large diameter portion 13 of the support shaft 10. At the same time, a predetermined preload is applied to the balls 4 and 5 in the respective rows.

Sealing devices 15 and 16 seal an annular bearing space 14 between the outer ring 3 and the inner rings 7A and 7B on both sides in the axial direction. The sealing devices 15 and 16 are respectively comprised of cored bars 17 and 18, metal annuluses 19 and 20 having an L-letter shape in section, and elastic seal members 21 and 22. The cored bars 17 and 18 are fitted to an inner peripheral surface of the outer ring 3. The metal annuluses 19 and 20 are fitted to respective outer peripheral surfaces of the inner rings 7A and 7B in opposing positions of the cored bars 17 and 18. The elastic seal members 21 and 22 are respectively attached to the cored bars 17 and 18 and have lips. The lips are in contact with the metal annuluses 19 and 20 in the surfaces thereof facing the cored bars 17 and 18.

A stopper 23 is formed by reducing a vehicle-outer-side end portion of the knuckle 2 radially inward in diameter. The outer ring 3 is pressed into the support hole 2A of the knuckle 2 so that the vehicle-outer-side end face of the outer ring 3 abuts the stopper 23. The vehicle-outer-side end face of the outer ring 3 is further pressed into the stopper 23. The stop ring 24 abuts a vehicle-inner-side end face of the outer ring 3. Thereby, the outer ring 3 is prevented from slipping out toward a vehicle inner side B. The stop ring 24 is fitted into an annular groove 2a formed in an inner peripheral surface of the knuckle 2.

In the case of a vehicle comprising such a system as ABS (Antilock Brake System) and navigation system, it is necessary to detect a speed of the vehicle in operating such a system. For the detection of a vehicle speed, a rotation of the inner rings 7A and 7B rotating synchronously with the hub wheel 9 is detected. A detecting device 25 serves to detect the rotation of the inner rings 7A and 7B. The detecting device 25 comprises a pulsar ring 26 and a detector 30. The pulsar ring 26 is fitted to a side surface of the metal annulus 19 of the seal device 15. The detector 30 is comprised of a main body 28 inserted into a mounting hole 38 formed in the knuckle 2 and a detecting portion 29 facing the pulsar ring 26.

The mounting hole 38 of the knuckle 2 is formed away from the stop ring 24 toward the vehicle inner side B so that the detector 30 can avoid the stop ring 24.

In the bearing apparatus 1, the detector 30 is, therefore, is arranged to be disposed away from the stop ring 24 toward the vehicle inner side B in order to avoid the stop ring 24. Because of the disposition of the detector 30, the detecting portion 29 of the detector 30 is axially distant from the pulsar ring 26 by at least an axial width dimension of the stop ring 24. As a result, an output of the detecting portion 29 is reduced resulting in a less accurate detection of the vehicle speed.

### DISCLOSURE OF THE INVENTION

A vehicle-use rolling bearing apparatus according to the present invention comprises:
an outer ring inserted into a support hole formed in a support member supported on a vehicle side;
an inner ring rotatably carried around an axis via a plurality of rolling elements with respect to the outer ring;
a stop ring fitted to an inner peripheral surface of the support hole so as to axially locate the outer ring, the stop ring having a cutout in a circumferential part thereof; and
a rotation detecting device for detecting a rotation of the inner ring, wherein
the rotation detecting device comprises:
   a pulsar ring and a detector,
   the pulsar ring is provided in the inner ring and has magnetic poles alternately different in a circumferential direction of the inner ring; and
   a detector is extended radially inward from the support member, at least a part of the detector in the axial direction is positioned in the cutout of the stop ring, and the detector is provided in an end portion thereof with a detecting element axially facing the pulsar ring and serving to detect a variation of a magnetic field in connection with a rotation of the pulsar ring.

According to the foregoing configuration, the detecting element can be arranged to be closer to the pulsar ring, which enables a rotational status of the pulsar ring to be more accurately detected. Thus, a vehicle speed can be more accurately detected.

According to a preferable embodiment of the present invention, a vehicle-use rolling bearing apparatus comprises a hub wheel. The hub wheel has a barrel portion pressed into a central hole of the inner ring and a diametrically-enlarged portion on a vehicle outer side of the barrel portion. On an outer peripheral surface of the diametrically-enlarged portion is provided a hub flange for mounting a wheel. The barrel portion of the hub wheel has a central hole, into which a support shaft is fitted.

A further preferable embodiment of the present invention offers a vehicle-use rolling bearing apparatus, wherein a nut is screwed into a vehicle-outer-side endportion of the support shaft. The nut is fastened into a vehicle-outer-side end portion of the hub wheel. The inner ring is formed from a pair of axially-disposed inner rings. The rolling elements are interposed axially in two rows between the outer ring and respective inner rings. The support shaft has a diametrically-enlarged portion on a vehicle inner side. The respective inner rings are compression-fitted to each other between the diametrically-enlarged portion of the hub wheel and the diametrically-enlarged portion of the support shaft by fastening the nut. Thereby a predetermined preload is applied to the rolling elements in each row.

### BRIEF DESCRIPTION OF THE DRAWINGS

Fig. 1 is a sectional view showing an entire configuration of a vehicle-use rolling bearing apparatus according to a preferred embodiment of the present invention.
Fig. 2 is an enlarged sectional view of a part of Fig. 1.
Fig. 3 is an enlarged perspective view of an essential part of Fig. 1.
Fig. 4 is a sectional view showing an entire configuration of a vehicle-use rollingbearing apparatus according to another preferred embodiment of the present invention.
Fig. 5 is a perspective view showing a modification of a stop ring according to the present invention.
Fig. 6 is a sectional view showing an entire configuration of a conventional vehicle-use rolling bearing apparatus.

### DESCRIPTION OF PREFERRED EMBODIMENTS

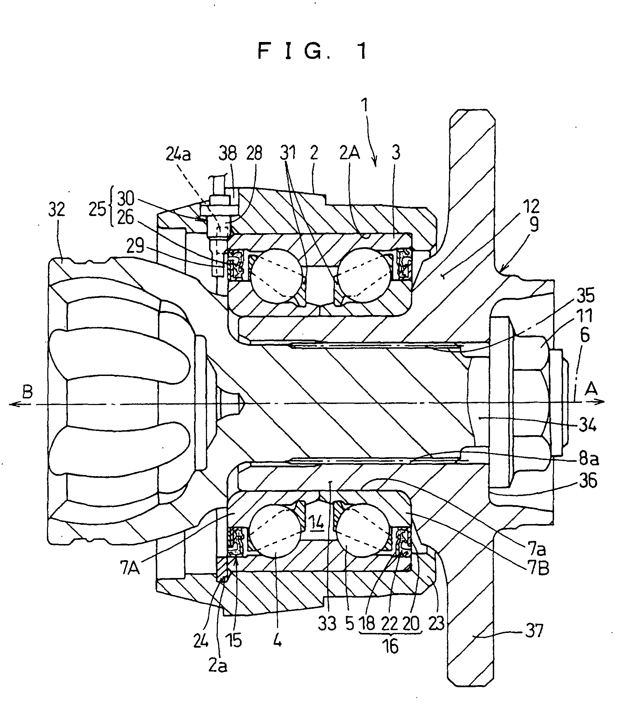

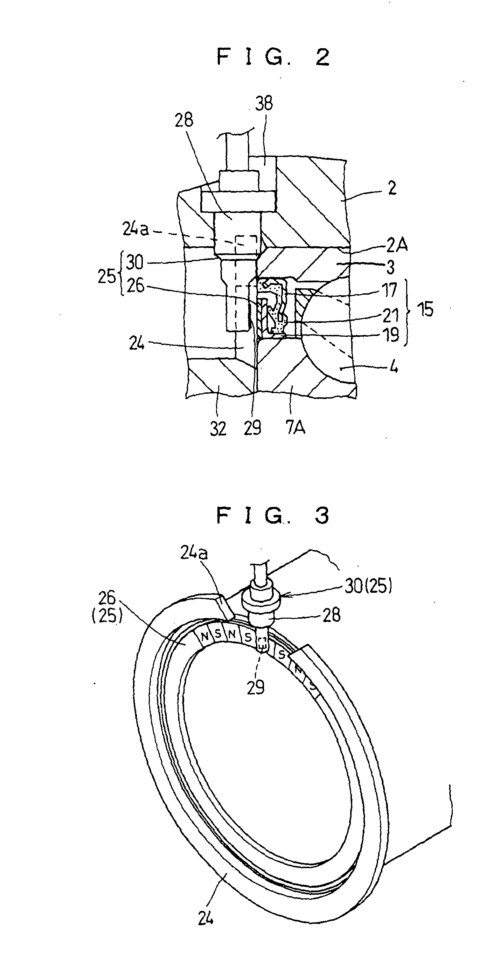

Referring to Figs. 1 through 3, a vehicle-use rolling bearing apparatus according to a preferred embodiment of the present invention is described. A rolling bearing apparatus 1 in the figures is for a driving wheel side of a vehicle. The bearing apparatus 1 comprises a knuckle 2 as a support member supported on a vehicle body side, a single outer ring 3, two rows of balls 4 and 5 in an axial direction as rolling elements, cages 31 and 31 for respectively retaining balls 4 and 5 in the respective rows, and two rows of inner rings 7A and 7B in the axial direction. The outer ring 3 is pressed into a support hole 2A formed in the center of the knuckle 2. The inner rings 7A and 7B are rotatably carried around an axis 6 via the balls 4 and 5 with respect to the outer ring 3. The balls 4 and 5 are rollingly retained at regular intervals in circumference by the cages 31 and 31 respectively. A numeral 32 denotes a cup-shaped outer ring of a constant velocity joint for transmitting a driving force from the vehicle body side as a support shaft. A numeral 34 denotes a shaft portion integral with the cup-shaped outer ring 32, and a numeral 35 denotes a spline. A hub wheel 9 has a barrel portion 33. The barrel portion 33 is pressed into a central hole 7a of the inner rings 7A and 7B. The shaft portion 34 of the constant velocity joint is fitted into a central hole 8a of the barrel portion 33 from a vehicle inner side B via the spline 35.

A nut 11 is screwed into a vehicle-outer-side end portion of the shaft portion 34 of the constant velocity joint. A concave end portion 36 of the hub wheel 9 is fastened by the nut 11 so that respective end faces of the inner rings 7A and 7B are compression-fitted to each other between a diametrically-enlarged portion 12 of the hub wheel 9 and the outer ring 32 of the constant velocity joint (corresponding to a diametrically-enlarged portion of the support shaft on the vehicle inner side). Thereby, a predetermined preload is applied to the balls 4 and 5 in the respective rows.

A stopper 23 serves to prevent the outer ring 3 from slipping out toward a vehicle outer side A. The stopper 23 is formed by reducing a vehicle-outer-side end portion of the knuckle 2 radially inward in diameter. The outer ring 3 is pressed into the support hole 2A of the knuckle 2 from the vehicle inner side toward the vehicle outer side. An end portion of the outer ring 3 abuts the stopper 23. A stop ring 24 prevents the outer ring 3 from slipping out toward the vehicle inner side. An annular groove 2a is formed in an inner peripheral surface of the support hole 2A of the knuckle 2 on the vehicle-inner-side B. The stop ring 24 is fitted into the groove 2a of the support hole 2A of the knuckle 2 so as to be in contact with a vehicle-inner-side end face of the outer ring 3. The stop ring 24 has a cutout 24a in a circumferential part thereof.

A radially outward hub flange 37 is formed on an outer peripheral surface of the diametrically-enlarged portion 12 of the hub wheel 9. To a vehicle-outer-side side surface of the hub flange 37 is mounted a wheel via a brake disc rotor and a tire wheel not shown.

Sealing devices 15 and 16 respectively seal an annular bearing space 14 between the outer ring 3 and the inner rings 7A and 7B on the vehicle inner and outer sides. The sealing device 15 is comprised of a cored bar 17, a metal annulus 19 having an L-letter shape in section, and an elastic seal member 21 made of elastomer. The sealing device 16 is also comprised of a cored bar 18, a metal annulus 20 having an L-letter shape in section, and an elastic seal member 22 made of elastomer. The cored bars 17 and 18 are respectively fitted to an inner peripheral surface of the outer ring 3. The metal annuluses 19 and 20 are respectively fitted to outer peripheral surfaces of the inner rings 7A and 7B axially facing the cored bars 17 and 18. The elastic seal members 21 and 22 are respectively attached to the cored bars 17 and 18 and have lips. The lips are in contact with the metal annuluses 19 and 20 in the surfaces thereof facing the cored bars 17 and 18. Respective outer . surfaces of the metal annuluses 19 and 20 of the sealing devices 15 and 16 are disposed so as to be flush with the vehicle-inner-side and vehicle-outer-side end faces of the respective inner rings 7A and 7B.

A rotation detecting device 25 detects the rotation of the inner rings 7A and 7B in the case of detecting a vehicle speed for operating such a system as ABS (Antilock Brake System) and navigation system installed in a vehicle. The rotation detecting device 25 comprises a pulsar ring 26 rotating around the axis synchronously with the inner ring 7A as an example of an encoder and a detector 30 for detecting a rotation of the pulsar ring 26. The pulsar ring 26 is attached to a vehicle-inner-side side surface of the metal annulus 19 of the sealing device 15. An outer diameter of the pulsar ring 26 is arranged to be substantially the same as or smaller than an inner diameter of the stop ring 24.

Magnet, rubber magnet made by combining magnetic powder with elastomer, plastic magnet by combining magnetic powder with resin, or the like is used for a material of the pulsar ring 26. With respect to the pulsar ring 26, magnetization is applied such that different poles, N pole and S pole are alternately configured in a circumferential direction of the inner ring.

The detector 30 has a detecting main body 28. The detecting main body 28 extends to a position in which a radially inward end portion thereof axially faces the pulsar ring 26 via the cutout 24a of the stop ring 24. A detecting element 29 is provided in a vehicle-outer-side side surface of the end portion of the detecting main body 28. The detecting element 29 axially faces the respective N poles and S poles of the pulsar ring 26. A base portion of the detecting main body 28 is inserted into a mounting hole 38 of the knuckle 2. The mounting hole 38 of the knuckle 2 is formed in a radially outward position with respect to the cutout 24a of the stop ring 24. A circumferential cutout width of the cutout 24a of the stop ring 24 is larger than a diameter of the detecting main body 28. For example, the circumferential cutout width of the cutout 24a requires such an approximate length that a several number of the magnetic poles of the pulsar ring 26 can be circumferentially disposed. A circumferential width of the detecting element 29 corresponds to, at most, an approximate dimension of one magnetic pole.

An active sensor is used for the detector 30 of the rotation detecting device 25. The active sensor serves to detect detection signals constantly outputted from the detecting element 29 in connection with an engine drive. A magnetic resistance element or a Hall element is used for the detecting element 29.

In the foregoing configuration, power is transmitted from an unshown power transmitting shaft to the hub wheel 9 via the shaft portion 34 of the constant velocity joint. In response to the power transmission, a wheel is rotated around the axis in synchronization with the hub wheel 9, and a vehicle is thereby driven.

When the inner rings 7A and 7B are rotated around the axis synchronously with the hub wheel 9, the metal annuluses 19 and 20 of the sealing devices 15 and 16 fitted to the inner rings 7A and 7B are rotated around the axis as well. In response to this, the pulsar ring 26 is rotated. As a result, the different poles of the pulsar ring 26, the N poles and S poles alternately pass the detecting element 29 axially forward. In the consequence of that, a magnetic field in the axially forward area of the detecting element 2 9 varies. The detecting element 29 detects a speed of the variation of the magnetic field and outputs the detection signal to an unshown control device. Then, the control device calculates a vehicle speed in response to the detection signal.

The detecting element 29 of the detector 30 is inserted into the cutout 24a of the stop ring 24 toward the axis to thereby axially face the pulsar ring 26. The main body 28 of the detector 30 is inserted into the mounting hole 38 of the knuckle 2 so that the detecting element 29 and the pulsar ring 26 can axially face each other as described.

More specifically, the cutout 24a of the stop ring 24 and the mounting hole 38 of the knuckle 2 are in the substantially same radial direction and in the substantially same axial position. Therefore, the detecting element 29 is disposed to face the pulsar ring 26 in the vicinity of the pulsar ring 26. Because of the disposition in the vicinity, a distance between the detecting element 29 and the pulsar ring 26 is shorter in contrast to the conventional disposition that the detector 30 is disposed away from the stop ring 24 toward the vehicle inner side B to avoid the stop ring 24. Therefore, the signal output of the detecting 29 is increased resulting in a more accurate detection of a variation of a magnetic field of the pulsar ring 26. Consequently, a vehicle speed can be more accurately measured compared to the conventional apparatus achieving amore accurate ABS control and navigation.

The main body 28 of the detector 30 is inserted into the mounting hole 38 of the knuckle so that the detecting element 29 of the detector 30 can be inserted into the cutout 24a of the stop ring 24. Accordingly, it becomes possible, in some cases, to shorten an axial length of the knuckle 2 in response to the foregoing insertion. This improves a degree of freedom in designing the entire apparatus.

Further, a component capable of detecting not only a rotational speed but also a rotational direction of the pulsar ring 26 can be used for the detecting element 29.

### (Another preferred embodiment)

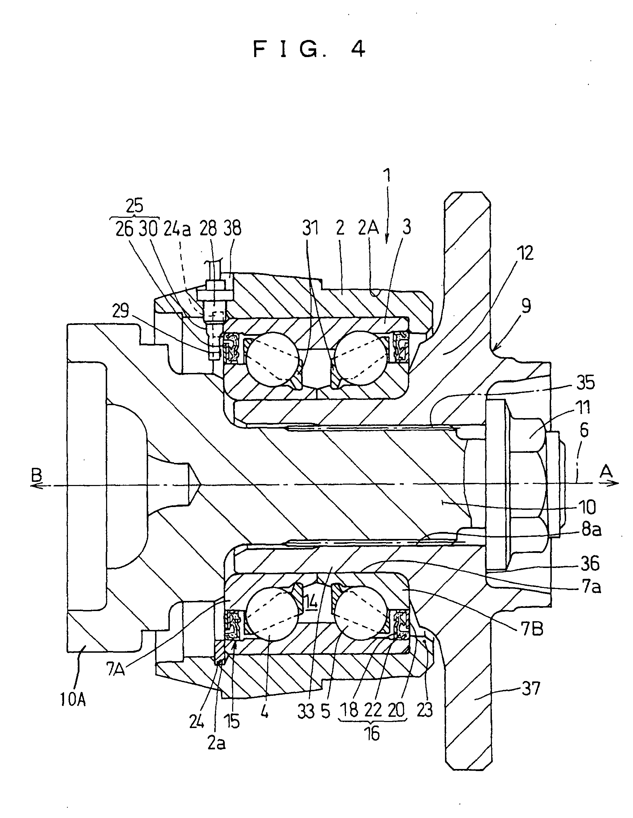

The present invention can be applied to a vehicle-use rolling bearing apparatus 1 for a driven wheel side shown in Fig. 4. In the bearing apparatus 1 of Fig. 4, a support shaft 10 is fitted into a central hole 8a of a hub wheel 9. The support shaft 10 has a diametrically-enlarged portion 10A on a vehicle inner side. The bearing apparatus 1 is for the driven wheel side and has a rotation detecting device 25 as in the foregoing embodiment. More specifically, the bearing apparatus 1 comprises a pulsar ring 26 fitted to an inner-side end face of an inner ring 7A disposed on the inner side and rotated around an axis 6 synchronously with the inner ring 7A and a detector 30 for detecting a rotation of the pulsar ring 26.

A main body 28 of the detector 30 is inserted into a mounting hole 38 of the knuckle 2 so that a detecting element 29 of the detector 30 can be inserted into a cutout 24a of a stop ring 24. In this configuration, as in the foregoing embodiment, a variation of a magnetic field of the pulsar ring 26 can be more accurately detected resulting in a more accurate measurement of a vehicle speed compared to a conventional apparatus.

The present invention can be applied to any rotation detecting device configured in such manner that the shorter a distance between an encoder and a detecting portion is, the more improved a detection accuracy is.

In the present invention, when a circumferential width of the cutout 24a of the stop ring 24 is too small for both of the main body 28 and detecting element 29 of the detector to be placed therein, a minimum part of the detecting element 29 required for detection may be disposed in the cutout 24a, while disposing the rest of the detecting element 29 away from the stop ring 24 toward the vehicle inner side.

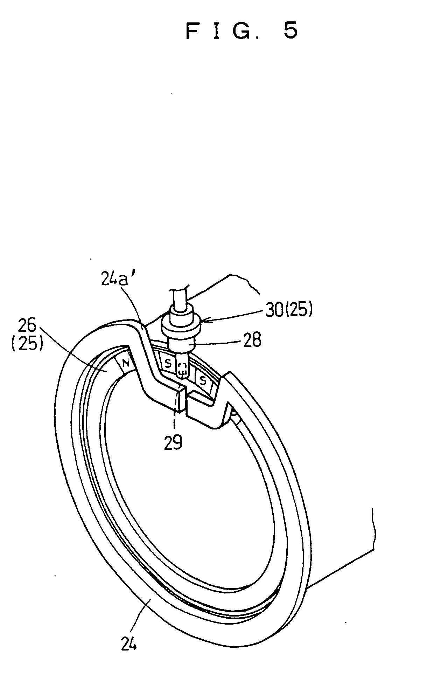

According to the present invention, as shown in Fig. 5, a concave portion 24a' hollowed more radially inward than the pulsar ring 26 may be formed in a part of the stop ring 24. Then, the detecting element 29 may be disposed in the concave portion 24a' so as to face the pulsar ring 29. In the present invention, the concave portion 24a' is included in the cutout 24a.

### INDUSTRIAL APPLICABILITY

The present invention can be applied to a vehicle-use rolling bearing apparatus, wherein a rotation detecting device for detecting a wheel rotating speed is provided.

## Claims

1. A rolling bearing apparatus comprising:
an outer ring inserted into a support hole formed on a support member supported on a vehicle body side;
an inner ring rotatably carried around an axis via a plurality of rolling elements with respect to the outer ring;
a stop ring fitted to an inner peripheral surface of the support hole to axially locate the outer ring, the stop ring having a cutout in a circumferential part thereof, and
a rotation detection device for detecting a rotation of the inner ring, wherein
the rotation detecting device comprises a pulsar ring and a detector,
the pulsar ring is provided in the inner ring and has magnetic poles alternately different in a circumferential direction of the inner ring, and
the detector extends radially inward from the support member, at least a part of the detector in the axial direction is positioned in the cutout of the stop ring, and the detector is provided in an end portion thereof with a detecting element axially facing the pulsar ring and serving to detect a variation of a magnetic field in connection with a rotation of the pulsar ring.

2. A rolling bearing apparatus as claimed in Claim 1, wherein
a hub wheel is provided, the hub wheel having a barrel portion pressed into a central hole of the inner ring and a diametrically-enlarged portion on a vehicle outer side of the barrel portion,
a hub flange for mounting a wheel is provided on an outer peripheral surface of the diametrically-enlarged portion, and
the barrel portion of the hub wheel has a central hole, the central hole provided with a support shaft fitted thereinto.

3. A rolling bearing apparatus as claimed in Claim 2, wherein
a nut is screwed into a vehicle-outer-side end portion of the support shaft,
the nut is fastened with respect to a vehicle-outer-side end portion of the hub wheel,
the inner ring is formed from a pair of axially-disposed inner rings,
the rolling elements are interposed axially in two rows between the outer ring and the respective inner rings,
the support shaft has a diametrically-enlarged portion on a vehicle inner side thereof, and
the pair of inner rings are compression-fitted to each other between the diametrically-enlarged portion of the hub wheel and the diametrically-enlarged portion of the support shaft by fastening the nut so that a predetermined preload is applied to the rolling elements in the respective rows.

4. A rolling bearing apparatus as claimed in Claim 1, wherein
the support member has a radially inward stopper on a vehicle outer side thereof,
the outer ring is pressed into the support hole of the support member from a vehicle inner side toward a vehicle outer side,
a vehicle-outer-side end face of the outer ring abuts the stopper, while a vehicle-inner-side end face thereof abuts the stop ring so that the outer ring is prevented from slipping out toward the vehicle inner side, and
the stop ring is fitted into an annular groove formed in an inner peripheral surface of the support member.

5. A rolling bearing apparatus as claimed in Claim 1, wherein
the support member is provided with a mounting hole for fixing the detector, the mounting hole radially penetrated through from an outer peripheral surface of the support member toward the support hole, and
the mounting hole is formed in such manner that at least part of an opening portion of the mounting hole on the support hole side is disposed in the cutout of the stop ring.
